**Europäisches Patentamt**

**European Patent Office**

**Office européen des brevets**

(11) Veröffentlichungsnummer : **0 168 724**
**B1**

(12) **EUROPÄISCHE PATENTSCHRIFT**

(45) Veröffentlichungstag der Patentschrift :
**13.04.88**

(21) Anmeldenummer : **85108332.9**

(22) Anmeldetag : **05.07.85**

(51) Int. Cl.⁴ : **B 65 G 53/46**, B 01 J 3/02

(54) Einschleusvorrichtung zum Einschleusen rieselfähiger Feststoffe in einen unter Druck stehenden Behälter.

(30) Priorität : **14.07.84 DE 3426030**

(43) Veröffentlichungstag der Anmeldung :
**22.01.86 Patentblatt 86/04**

(45) Bekanntmachung des Hinweises auf die Patenterteilung : **13.04.88 Patentblatt 88/15**

(84) Benannte Vertragsstaaten :
**AT BE CH DE FR GB IT LI NL SE**

(56) Entgegenhaltungen :
**DE-A- 1 767 453**
**DE-A- 2 153 188**
**FR-A- 2 362 291**

(73) Patentinhaber : **Bühler-MIAG GmbH**
**Ernst-Amme-Strasse 19**
**D-3300 Braunschweig (DE)**

(72) Erfinder : **Derhake, Thomas, Dipl.-Ing.**
**Comeniusstrasse 8**
**D-3300 Braunschweig (DE)**
Erfinder : **Kruse, Hermann, Dipl.-Ing.**
**Brandtsweg 63**
**D-2900 Oldenburg (DE)**

**EP 0 168 724 B1**

## Beschreibung

Gegenstand der Erfindung ist eine Einschleusvorrichtung zum Einschleusen rieselfähiger Feststoffe in einen unter Druck stehenden Behälter mit einer vorgeschalteten, von ihm abschließbaren Einschleuskammer, deren aus einer Zuführleitung beschickte Guteintrittsöffnung durch ein Absperrorgan verschließbar ist.

Solche unter Überdruck stehenden Behälter sind auf verschiedenen technischen Gebieten unerläßliche Voraussetzung für den Funktionsablauf bzw. Arbeitsablauf, zum Beispiel in der Verfahrenstechnik, bei der pneumatischen Förderung und anderen mehr. Bei ihnen gilt es, die vorgeordnete Einschleuskammer im Arbeitstakt sowohl gegen die Atmosphäre als auch zeitweise gegen den Gutzulauf abzudichten. Bei einer bekannten Einschleusvorrichtung ist die rohrförmige Einschleuskammer gegenüber dem Gutzulauf mittels einer in letzteren eingefügten Gutzuteilvorrichtung abgedichtet, während ein Kolben das Abdichten gegen Atmosphäre bewirkt. Neben dem Erfordernis gesonderter Absperrmittel für Gut und Druckmedium ist bei ihr der auf der Wand der Einschleuskammer gleitende Kolben ungünstig, weil zwischen beide gelangende Gutteilchen einen hohen Verschleiß oder sogar völliges Blockieren verursachen können (DE-PS 843 090). Eine andere bekannte Einschleusvorrichtung bedarf ebenfalls zweier Absperrorgane, nämlich für den Gutzulauf in die Einschleuskammer eines mechanischen Schiebers und zum Abdichten gegen Atmosphäre einer zwischen einem Verdrängerkolben und der Wand der Einschleuskammer angeordneten Rollmanschette. Die Rollmanschette ist hier U-förmig und nach innen zu offen, so daß Gutteilchen eindringen und an den einander gegenüberliegenden Lappen der Rollmanschette reiben und ein früher Verschleiß der letzteren die unausweichliche Folge ist (DE-OS 21 53 188). Stand der Technik ist ferner eine Einschleusvorrichtung zum Einbringen fester Teilchen in einen Hochdruckbehälter mit einem vorgeordneten Druckbehälter als Einschleuskammer, dem über getrennte, durch je ein Ventil absperrbare Leitungen das Gut und ein Gas zugeführt werden und welcher einen durch ein hydraulisches Zylinder-Kolbensystem betätigten Verdrängerkörper aufnimmt, wobei zwischen letzterem einerseits und dem Druckbehälter andererseits eine flexible, durch ein hydraulisches Druckmittel beaufschlagte Manschette variablen Volumens gespannt ist, die in Verbindung mit dem Verdrängerkörper bei dessen Arbeitshub den Druckbehälter ausfüllt und dabei sowohl die Guteintrittsöffnung als auch die Gaseintrittsöffnung dichtend abdeckt. Die Manschette wird bei dieser Lösung großen und häufigen Änderungen ihres Biegeradius' unterworfen und ist durch die hieraus resultierende Erwärmung und Alterung hohem Verschleiß ausgesetzt ; weil die Formänderung der Manschette durch Aufpumpen mit Druckmittel bzw. Absaugen des Druckmittels bewirkt wird, muß hier der Innendruck vom Hub des Verdrängerkörpers abhängig geregelt werden, was die Vorrichtung noch mehr aufwendig macht ; hinzu kommt als weiterer Minuspunkt, daß bei einer Undichtigkeit das Gut von dem hydraulischen Druckmittel verunreinigt wird (DE-OS 17 67 453).

Der Erfindung liegt die Aufgabe zugrunde, bei der angesprochenen Gattung Einschleusvorrichtungen das Abdichten der Einschleuskammer zu verbessern und zu vereinfachen sowie die Lebensdauer des Absperrorgans zu erhöhen. Diese Aufgabe ist erfindungsgemäß dadurch gelöst, daß zum Abdichten der Einschleuskammer gegen Atmosphäre und zum Abschließen der Guteintrittsöffnung ein gemeinsames Absperrorgan vorgesehen und als von einem gesteuert bewegten Membranträger abgestützte Rollmembran mit konstantem Druckmediuminhalt ausgebildet ist. Eine besonders gut und mit kleinem Krümmungsradius abrollende Form der Rollmembran, die sich außerdem sicher am Membranträger arretieren läßt, besteht erfindungsgemäß darin, daß diese einteilig und an ihren beiden Enden mit einem Wulst gestaltet ist, mit dessen Hilfe sie in dem Membranträger dichtend eingespannt werden kann. Nach der weiteren Erfindung ist der Membranträger aus zwei im Querschnitt der Querschnittsform der Einschleuskammer entsprechenden Spanntöpfen gebildet, die lösbar, aber druckdicht miteinander verbunden sowie mit ihren offenen Enden einander zugekehrt sind und je an ihrem offenen Ende einen Rücksprung haben, der die Aufnahme für einen Wulst der Rollmembran bildet, wobei einer der Spanntöpfe mit Stellmitteln verbunden ist und dieser oder der andere Spanntopf an eine Druckmediumquelle anschließbar ist und an der Dichtfuge zwischen den Spanntöpfen wenigstens eine Durchtrittsöffnung für das Druckmedium vorgesehen ist, welche das Innere der Spanntöpfe mit dem Inneren der Rollmembran verbindet. Ein so aufgebauter Membranträger ist leicht zu fertigen, stützt die Rollmembran in allen Rollpositionen in ausreichendem Maße ab und vereinfacht ihre Montage. Der Boden des unteren Spanntopfes des Membranträgers fungiert gleichzeitig als Verdrängungsfläche, mit deren Hilfe die Druckluft in den Behälter gedrückt wird, von wo sie in die Förderleitung strömt und hier noch nutzbringend als Förderluft wirkt.

Als Stellmittel für die Rollmembran bzw. ihren Träger dient wegen der optimalen Regelbarkeit vorzugsweise ein hydraulisches Zylinder-Kolbensystem, dessen Zylinder auf dem Schleusengehäuse fixiert ist und dessen Kolben mit einem Spanntopf fest aber lösbar verbunden ist.

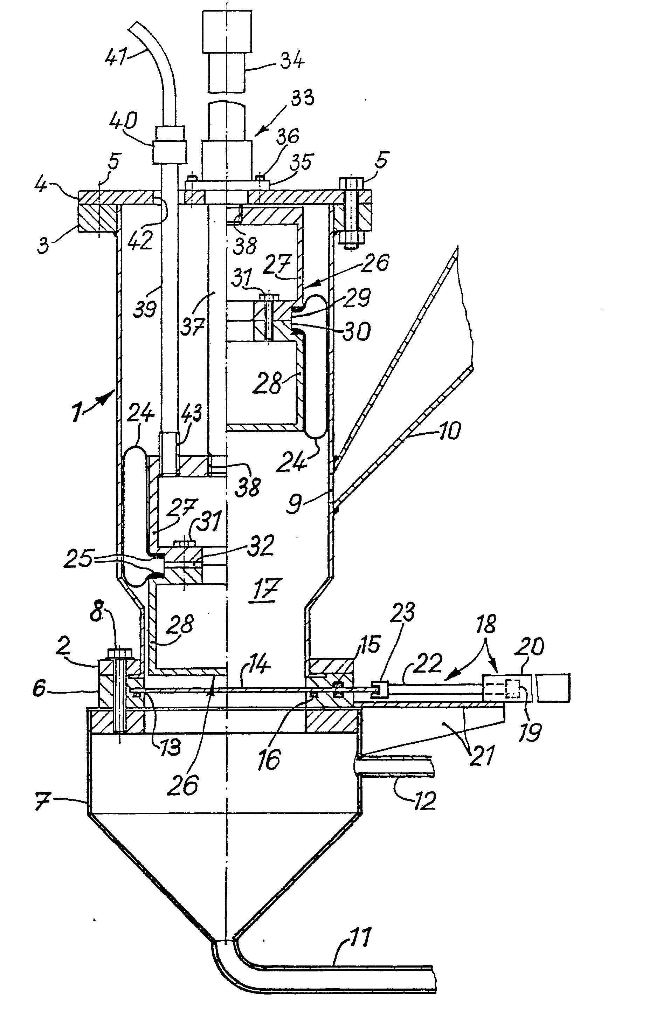

In der Zeichnung ist ein Ausführungsbeispiel der Einschleusvorrichtung nach der Erfindung in der Anwendung bei einem Druckbehälter zum Einspeisen in eine pneumatische Förderleitung dargestellt, das im nachfolgenden beschrieben wird. Die Figur zeigt einen Längsmittelschnitt durch die Einschleusvorrichtung, wobei der Membranträger samt Membran in der linken Figurhälfte in seiner untersten Stellung und in der rechten Figurhälfte in seiner obersten Position dargestellt ist.

Die Einschleusvorrichtung umfaßt ein zylindrisches Schleusengehäuse 1, das unten verjüngt ist und einen Flansch 2 aufweist und oben mit einem Flansch 3 versehen ist. Der Flansch 3 nimmt einen Deckel 4 auf, der das Schleusengehäuse 1 nach oben hin abschließt und durch Schrauben 5 mit ihm verbunden ist. Mit seinem Flansch 2 ruht das Schleusengehäuse 1 auf einem Schiebergehäuse 6, das seinerseits von einem Behälter 7 aufgenommen wird. Schrauben 8 verbinden Schleusengehäuse 1, Schiebergehäuse 6 und Behälter 7 fest miteinander. Annähernd auf halber Höhe hat das Schleusengehäuse 1 eine Guteintrittsöffnung 9 und einen in letztere mündenden Anschlußstutzen 10, welcher mit einer nicht näher dargestellten Rohrleitung verbunden ist. Der Behälter 7 endet unten trichterförmig und seine Auslauföffnung mündet in eine pneumatische Förderleitung 11.

Die Beaufschlagung des Behälters 7 mit Druckluft bzw. die Zufuhr der Förderluft erfolgt über die Rohrleitung 12. Das Schiebergehäuse 1 weist einen Führungsschlitz 13 auf, der einen Flachschieber 14 gleitend aufnimmt. Der Flachschieber 14 ist gegen Atmosphäre durch eine Dichtung 15 und gegen den Behälter 7 durch einen Dichtring 16 abgedichtet. Zum Betätigen des Flachschiebers 14 ist ein pneumatisches Zylinder-Kolbensystem 18 aus Kolben 19 und Zylinder 20 vorgesehen, dessen Zylinder auf einer am Behälter 7 angebrachten Konsole 21 befestigt ist. Die Kolbenstange 22 des Kolbens 19 besitzt einen Kolbenstangenkopf 23, in welchem der Flachschieber 14 eingesetzt und fixiert ist. Zum Abdichten der vom Schleusengehäuse 1 umgrenzten Einschleuskammer 17 gegen Atmosphäre und zum Abschließen der Guteintrittsöffnung 9 dient ein gemeinsames Absperrorgan in Form einer Rollmembran 24 mit konstantem Druckluftinhalt, welche einteilig ausgeführt ist und an ihren beiden Enden je einen Wulst 25 hat, mit dessen Hilfe sie in einem Membranträger 26 dichtend eingespannt ist. Der Membranträger 26 ist aus zwei im Querschnitt zylindrischen Spanntöpfen 27, 28 gebildet, welche je an ihrem offenen Ende einen Rücksprung 29 bzw. 30 haben. Die Rücksprünge 29, 30 bilden je eine Aufnahme für einen Wulst 25 der Rollmembran 24. Die Spanntöpfe 27, 28 sind mit ihrem offenen Ende einander zugekehrt und mittels Schrauben 31 druckdicht gegeneinandergespannt. Sie sind in ihrer Höhe so bemessen, daß in jeder Position des Rollmembranträgers 26 die Rollmembran 24 auf ihrer gesamten wirksamen Länge zuverlässig von ihm abgestützt wird. An der Dichtfuge zwischen den beiden Spanntöpfen 27, 28 sind gleichmäßig am Umfang verteilt mehrere radiale Kanäle 32 vorgesehen, die das Innere der Spanntöpfe 27, 28 mit dem Inneren der Rollmembran 24 verbinden.

Zum Verstellen des Membranträgers 26 von der in der linken Hälfte der Figur veranschaulichten Schließstellung der Rollmembran 24 in ihre in der rechten Figurenhälfte dargestellte Offenstellung und umgekehrt ist ein hydraulisches Zylinder-Kolbensystem 33 vorgesehen, dessen Zylinder 34 mit Hilfe seines Flansches 35 auf dem Deckel 4 sitzt und durch Schrauben 36 an letzterem fixiert ist. Die Kolbenstange 37 des nichtgezeichneten Kolbens des Zylinder-Kolbensystems 33 besitzt an ihrem freien Ende ein Gewinde 38, auf das der mit einem entsprechenden Gegengewinde versehene Spanntopf 27 aufgeschraubt ist. Für das Einbringen der Druckluft in die Rollmembran 24 ist der Spanntopf 27 mit einer Rohrleitung 39 verbunden, welche durch eine Rohrverschraubung 40 mit einem an eine nicht dargestellte Druckluftquelle angeschlossenen Druckschlauch 41 in Verbindung steht. Die Rohrleitung 39 ist durch eine Ausnehmung 42 im Deckel 4 hindurchgeführt und mittels ihres Gewindes 43 in eine im Spanntopf 27 vorgesehene Gewindebohrung geschraubt.

Arbeitsweise der Einschleusvorrichtung : Während des Betriebes der Einschleusvorrichtung steht der Behälter 7 über die Rohrleitung 12 ständig unter einem bestimmten Druck. Zu Beginn eines Arbeitsspieles ist der Flachschieber 14 geschlossen, und die Rollmembran 24 samt Membranträger 26 befinden sich in der Schließstellung (linke Hälfte der Figur). Im Anschlußstutzen 10 bzw. in der mit ihm verbundenen Gutzuführleitung steht eine Säule aus dem in die Förderleitung 11 einzuspeisenden Gut an, beispielsweise Kaffeebohnen, Kunststoffgranulat, Reis oder ein anderes rieselfähiges Produkt. Sobald die nicht dargestellte zugehörige Programmsteuerung, beispielsweise durch Drücken eines Tasters, in Aktion gesetzt wird, betätigt diese das hydraulische Zylinder-Kolbensystem 33 und letzteres bewegt unter Vermittlung seiner Kolbenstange 37 den Membranträger 26 samt Rollmembran 24 nach oben in die Offenstellung gemäß Darstellung in der rechten Figurenhälfte. Nachdem diese Position erreicht ist, bringt die Programmsteuerung das Zylinder-Kolbensystem 33 außer Tätigkeit und setzt damit Membranträger 26 und Rollmembran 24 still. Durch die von der Rollmembran 24 freigegebene Guteintrittsöffnung 9 strömt nun das Gut in die Einschleuskammer 17 und staut sich — da der Flachschieber 14 geschlossen ist und als Boden fungiert — in dieser auf, bis eine bestimmte Menge Gut in ihr enthalten bzw. ein bestimmter Füllungsgrad erreicht ist. Nach Erreichen dieses Füllungsgrades aktiviert die besagte Programmsteuerung erneut das Zylinder-Kolbensystem 33 und letzteres bewegt mit Hilfe seiner Kolbenstange 37 den Membranträger 26 und mit diesem die Rollmembran 24 nach unten in Richtung Schließstellung, wobei die Rollmembran 24 die Guteintrittsöffnung 9 wieder verschließt. Während dieser Bewegung von Membranträger 26 und Rollmembran 24 und nachdem die Gutaustrittsöffnung 9 von letzterer wieder abgeschlossen ist, betätigt die Programmsteuerung das pneumatische Zylinder-Kolbensystem 18, welches den Flachschieber 14 öffnet, so daß das Gut aus der Einschleuskammer 17 in den Behälter 7 fließt. Von hier wird es durch die aus der Rohrleitung 12 strömende Druckluft in die Förderleitung 11 transportiert und darin abgefördert. Nach Entleeren der Einschleuskammer 17 schaltet die Programmsteuerung das Zylinder-Kolbensystem 18 um, und dieses schließt den Flachschieber 14 wieder. Damit ist ein Arbeitszyklus abgeschlossen und ein neues Arbeitsspiel läuft in Abhängigkeit von der Programmsteuerung automatisch an.

Die mit der Erfindung gewonnenen Vorteile bestehen im wesentlichen darin, daß mit einer einzigen Rollmembran die Schleusenkammer gegen Atmosphäre abgesperrt und außerdem die Guteintrittsöffnung geöffnet und geschlossen werden kann, so daß ein spezielles Absperrorgan für die Gutzufuhr in Fortfall kommt und der Aufbau der Einschleusvorrichtung einfacher und kostengünstiger ausfällt, ferner darin, daß die erfindungsgemäße Ausbildung des Membranträgers neben einer in allen Stellungen desselben optimalen Abstützung der Rollmembran ein Abrollen der letzteren auf der Schleusengehäusewand einerseits und dem Membranträger andererseits mit einem hinsichtlich geringer Walkarbeit günstigen Rollradius erfolgt, wodurch die Lebensdauer der Rollmembran erheblich verlängert wird ; diese Membranträgerausbildung ermöglicht einfachste Montage der Rollmembran sowie zuverlässigen Halt derselben an ihm und ein schadloses Überrollen und Hindurchlassen von Gutteilchen, welche in den Ringraum zwischen Membranträger und Schleusengehäuse gelangen. Das erfindungsgemäße Verstellen des Membranträgers durch ein hydraulisches Zylinder-Kolbensystem garantiert außer der nötigen Stellkraft einen größtmöglichen Füllungsgrad der Einschleuskammer und damit eine hohe Einschleusleistung bzw. Förderleistung, weil die Verweildauer des Membranträgers in der Offenstellung der Rollmembran stufenlos regelbar ist und dadurch das Öffnen und Schließen der Guteintrittsöffnung genau auf den richtigen Zeitpunkt gelegt werden kann.

**Patentansprüche**

1. Einschleusvorrichtung zum Einschleusen rieselfähiger Feststoffe in einen unter Druck stehenden Behälter (7) mit einer vorgeschalteten, von ihm abschließbaren Einschleuskammer (17), deren aus einer Zuführleitung (10) beschickte Guteintrittsöffnung (9) durch ein Absperrorgan verschließbar ist, dadurch gekennzeichnet, daß zum Abdichten der Einschleuskammer (17) gegen Atmosphäre und zum Abschließen der Guteintrittsöffnung (9) ein gemeinsames Absperrorgan vorgesehen und als von einem gesteuert bewegten Membranträger (26) abgestützte Rollmembran (24) mit konstantem Druckmediuminhalt ausgebildet ist.

2. Einschleusvorrichtung nach Anspruch 1, dadurch gekennzeichnet, daß die Rollmembran (24) einteilig gestaltet ist und an ihren beiden Enden je einen Wulst (25) aufweist, mit dessen Hilfe sie in dem Membranträger (26) dichtend eingespannt ist.

3. Einschleusvorrichtung nach Anspruch 1, dadurch gekennzeichnet, daß der Membranträger (26) von zwei im Querschnitt der Querschnittsform der Einschleuskammer (17) entsprechenden Spanntöpfen (27, 28) gebildet wird, die lösbar, aber druckdicht miteinander verbunden sowie mit ihren offenen Enden einander zugekehrt sind und je an ihrem offenen Ende einen Rücksprung (29, 30) haben, der die Aufnahme für einen Wulst (25) der Rollmembran (24) bildet, wobei einer der Spanntöpfe (27) mit Stellmitteln (33) verbunden ist und dieser oder der andere Spanntopf (28) an eine Druckmediumquelle anschließbar ist und an der Dichtfuge zwischen den Spanntöpfen (27, 28) wenigstens eine Durchtrittsöffnung (32) für das Druckmedium vorgesehen ist, welche das Innere der Spanntöpfe (27, 28) mit dem Inneren der Rollmembran (24) verbindet.

4. Einschleusvorrichtung nach Anspruch 3, dadurch gekennzeichnet, daß als Stellmittel ein Zylinder-Kolbensystem (33) dient, dessen Zylinder (34) auf dem Schleusengehäuse (1) angebracht ist und dessen Kolben über seine Kolbenstange (37) mit einem Spanntopf (27) fest, aber lösbar verbunden ist.

**Claims**

1. Lock device for the introduction of flowable solid material into a pressurised container (7) with an introduction chamber (17) which is connected in series and which can be closed off from it and the material intake port (9) of which, fed by a feed pipe (10), can be sealed off by shut-off device characterised in that to seal the introduction chamber (17) against the atmosphere and to close off the material intake port (9) a common shut-off device is provided and is formed by a rolling membrane (24) supported by a controlled moving membrane carrier (26) with a constant pressure medium content.

2. Lock device according to Claim 1, characterised in that the rolling membrane (24) is formed in one piece and has a bulge (25) at both its ends with the aid of which it can be clamped into the membrane carrier (26) to form a seal.

3. Lock device according to Claim 1, characterised in that the membrane carrier (26) is formed by two clamping vessels (27, 28) which in cross-section corresponds to the cross-sectional form of the introduction chamber (17), which are connected to each other so as to be detachable but tight and with their open ends facing one another and each have at their open end a recess (29, 30), which forms the holder for one bulge (25) of the rolling membrane (24), one of the clamping vessels (27) being connected to positioning means (33) and this or the other clamping vessel (28) being suitable for connection to a pressure medium source, and at least one opening (32) for the pressure medium being provided at the sealing joint between the clamping vessels (27, 28) connecting the interior of the clamping vessels (27, 28) to the interior of the rolling membrane (24).

4. Lock device according to Claim 3, characterised in that a cylinder-piston system (33) serves as positioning means, the cylinder (34) of which is mounted on the lock housing (1) and the piston of which is connected rigidly but so as to be detachable via its piston rod (37) to a clamping vessel (27).

**Revendications**

1. Dispositif d'éclusage pour introduire des matériaux solides et coulables dans un réservoir sous pression (7) et comportant un sas (17) qui est situé en avant et peut être isolé du réservoir et dont l'ouverture d'entrée (9) des matériaux, alimentée par une canalisation d'amenée (10), peut être fermée par un organe d'obturation, caractérisé en ce que la fermeture hermétique du sas (17) du côté de l'atmosphère et du côté de l'ouverture d'entrée (9) des matériaux est assurée par un organe d'obturation commun constitué par une membrane annulaire (24) prenant appui sur un support de membrane (26) dont les mouvements sont commandés et contenant une quantité constante d'agent de pression.

2. Dispositif d'éclusage selon la revendication 1, caractérisé en ce que la membrane annulaire (24) est d'une seule pièce et comporte à chacune de ses extrémités un bourrelet (25) à l'aide duquel elle s'encastre hermétiquement dans le support de membrane (26).

3. Dispositif d'éclusage selon la revendication 1, caractérisé en ce que le support de membrane (26) est constitué par deux pots d'encastrement (27, 28) dont la section transversale correspond à la forme de la section transversale du sas (17), qui sont reliés l'un à l'autre d'une manière amovible, mais hermétiquement à la pression, qui sont tournés l'un vers l'autre au niveau de leurs extrémités ouvertes et qui comportent, à chacune de leurs extrémités ouvertes, une partie de retrait (29, 30) qui peut recevoir un bourrelet (25) de la membrane annulaire (24), l'un des pots d'encastrement (27) étant relié à un dispositif de déplacement (33) et ce pot ou l'autre pot d'encastrement (28) pouvant être relié à une source d'agent de pression et le dispositif comprenant, au niveau d'un joint d'étanchéité situé entre les pots d'encastrement (27, 28), au moins une ouverture de passage (32) pour l'agent de pression qui relie l'intérieur des pots d'encastrement (27, 28) à l'intérieur de la membrane annulaire (24).

4. Dispositif d'éclusage selon la revendication 3, caractérisé en ce que le dispositif de déplacement et de réglage est constitué par un système à cylindre et piston (33) dont le cylindre (34) est monté sur l'enveloppe (1) du dispositif d'éclusage et dont le piston est relié solidement, mais d'une manière amovible, par sa tige de piston (37), à l'un des pots d'encastrement (27).